Europäisches Patentamt

European Patent Office

Office européen des brevets

(11) Publication number: **0 296 750**
**A2**

(12) **EUROPEAN PATENT APPLICATION**

(21) Application number: 88305448.8

(22) Date of filing: **15.06.88**

(51) Int. Cl.⁴: **B29C 69/02 , B29C 51/30 , B29C 51/00 , B29C 45/00**

(30) Priority: **18.06.87 JP 152221/87**
**03.12.87 JP 306755/87**

(43) Date of publication of application:
**28.12.88 Bulletin 88/52**

(84) Designated Contracting States:
**DE FR GB IT**

(71) Applicant: **MITSUBISHI KASEI CORPORATION**
**5-2, Marunouchi 2-chome Chiyoda-ku**
**Tokyo(JP)**

(72) Inventor: **Uchida, Masaaki**
**3-1-33-31 Hiroe**
**Kurashiki-shi Okayama-ken(JP)**
Inventor: **Yoshioka, Tsunemi**
**1446-10 Mizue**
**Kurashiki-shi Okayama-ken(JP)**
Inventor: **Tanaka, Yukuhito**
**3105-101 Kaminima Mabi-cho**
**Kibi-gun Okayama-ken(JP)**
Inventor: **Go, Shigeo**
**5-23-15 Sakuradai**
**Nerima-ku Tokyo(JP)**

(74) Representative: **Overbury, Richard Douglas et al**
**HASELTINE LAKE & CO Hazlitt House 28**
**Southampton Buildings Chancery Lane**
**London WC2A 1AT(GB)**

(54) Method for producing thin-wall molded article having protrusions and a mold therefor.

(57) Disclosed herein is a method for producing a thin-wall molded article having protrusions.

According to the method of the present invention, a molded article having protrusions such as boss and rib integral with a sheet can be easily produced.

Fig. 3

# METHOD FOR PRODUCING THIN-WALL MOLDED ARTICLE HAVING PROTRUSIONS AND A MOLD THEREFOR

The present invention relates to a method for producing a thin-wall molded article having protrusions and a mold. More particularly, the present invention relates to a method for producing a thin-wall molded article having protrusions such as boss, rib, etc., by thermoforming a thermoplastic synthetic resin sheet, and a mold for producing the thin-wall molded article having protrusions.

Conventionally, when a thermoplastic synthetic resin sheet is thermoformed, the sheet is heated in advance into a semi-molten or molten state, and pressed against a mold. This method of thermoforming is classified into a vaccum forming (a heated sheet is attracted into a mold), a pressure forming (a heated sheet is pressed against a mold by air pressure), a vacuum-pressure forming (a heated sheet is pressed against a mold by air pressure and vacuum), a stamping forming (a heated sheet is clamped between two matched molds), etc., depending upon the method of pressing a sheet against a mold.

In the present invention, such a method of heating a sheet and pressing the heated sheet against a mold to obtain a molded article is generally referred to as a method of thermoforming a sheet.

In this kind of method of thermoforming a sheet, since the material to be formed is in the form of a sheet, it is impossible to change the shape of the sheet to a great degree, so that it is difficult to obtain a molded article having a portion extremely thicker than the original sheet. Namely, it is difficult to obtain a molded article having protrusions such as boss and rib by the conventional method of thermoforming a sheet.

For this reason, protrusions such as boss and rib must be formed by welding or the like after the thermoforming of the sheet. This process encounters a problem such as the lowering of the productivity efficiency and the reduction in the strength of the welding area.

With a view to solving the above-mentioned problems in the conventional method, the present inventors have studied a method for producing a molded article having protrusions such as boss and rib by a method of thermoforming a sheet. As a result, it has been found that a molded article having protrusions such as boss and rib integral with a sheet can be easily produced by using a mold which comprises a cavity on the inner surface of the mold, which is matched with the shape of the protrusions,and a feed passage for a molten thermoplastic resin, supplying the molten thermoplastic resin to the cavity and pressing a thermoplastic synthetic resin sheet against the mold. The present invention has been accomplished on the basis of this finding.

In a first aspect of the present invention, there is provided a method for producing a thin-wall molded article having protrusions, which comprises

using a mold which comprises a cavity on the inner surface of the mold, which is matched with the shape of the protrusions, and a feed passage for a molten thermoplastic resin which passes through the mold and reaches the cavity, and

supplying the molten thermoplastic resin which is fusible with a thermoplastic synthetic resin sheet to the cavity before or during the thermoforming of the thermoplastic synthetic resin sheet, or while the thermoplastic synthetic resin sheet is still in a heated state after the thermoforming, thereby forming the protrusions integrally on the thremoplastic synthetic resin sheet.

In a second aspect of the present invention, there is provided a mold for producing a thin-wall molded article having protrusions, which comprises a cavity on the inner surface of the mold, which is matched with the shape of the protrusions, and a feed passage for a molten thermoplastic resin as a material for the protrusions, the feed passage passing through the mold and reaching the cavity.

For a better understanding of the invention and to show how the same can be carried into effect, reference will now be made by way of example only to the accompanying drawings wherein:

Figs. 1 to 5 are schematic vertical sectional views of an embodiment of the mold according to the present invention which explain the method according to the present invention in order of the steps.

Fig. 6 to 9 are schematic vertical sectional views of an embodiment of the mold according to the present invention which explain another method according to the present invention in order of the steps.

In the drawings, the reference numeral 1 represents a thermoplastic synthetic resin sheet, 2 a lower mold, 3 a cavity having a shape matched with the shape of protrusions, 4 a molten resin supplyer, 5 a feed passage, 6 a nozzle, 7 a suction hole, 8 an upper mold, 9 a pressing plug, 10 an air pressure hole, 11 a heater, and 12 and 13 molten resin.

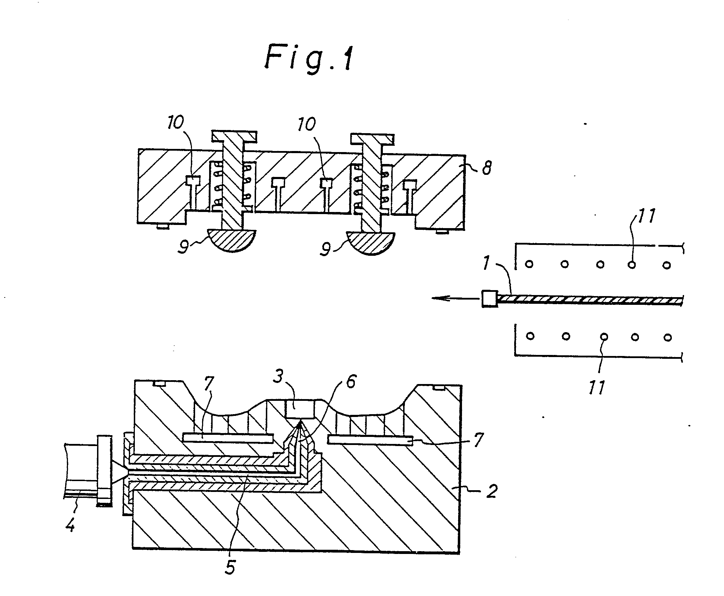

In Fig. 1, 1 shows a thermoplastic synthetic resin sheet having desired thickness, hardness, etc., as a material constituting a thin-wall molded article. As the resin for the sheet 1, thermoplastic resin is ordinarily used. As examples of the thermoplastic resin, polyolefin resin such as polyethylene and polypropylene, vinyl chloride resin such as polyvinyl chloride and a vinyl chloride-vinyl acetate copolymer, and styrene resin such as polystyrene, an acrylonytril-styrene copolymer and an acrylonytril-butadiene-styrene terpolymer will be cited.

As the sheet 1 of a thermoplastic resin, a multi-layer sheet, a composite sheet produced by laminating a cloth, knit, non-woven fabric, leather or the like on the opposite side to the side on which protrusions are to be formed, and a sheet of a composite material containing a filler such as an inorganic filler are usable. The sheet 1 is preheated by the heater 11 or the like, as shown in Fig. 1, and is subjected to the subsequent treatments in a semi-molten state. On the inner surface of the lower mold 2, the cavity having a shape matched with the shape of protrusions such as boss and rib is provided. A molten resin supplied from the molten resin supplyer 4 comprising an extruder, an injection unit or the like is intoduced into the cavity 3 from the nozzle 6 through the feed passage 5. The heated sheet 1 is pressed against the inner surface of the lower mold 2 by evacuating from the suction hole 7. The upper mold 8 is provided with the pressing plug 9 for molding the sheet 1 to a certain extent in conformity with the shape of the inner surface of the lower mold 2 and the air pressure hole 10 for pressing the sheet 1 against the inner surface of the lower mold 2 by pressurized air. The pressing plug 9 is made vertically movable by means of such as a spring, air pressure and hydraulic pressure.

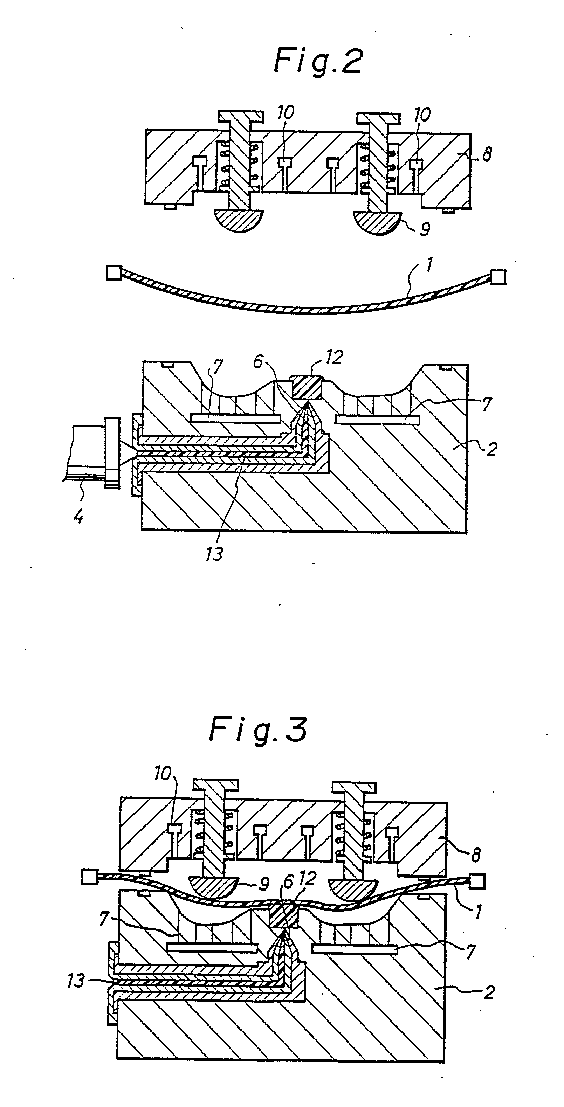

Fig. 2 shows the state in which the molten resin from the molten resin supplyer 4 is supplied from the nozzle 6 to to the cavity 3 for forming the protrusions such as boss and rib through the feed passage 5 in an amount slightly more than the volume of the cavity 3, in other words, in such an amount that a small amount thereof flows out of the cavity 3.

Fig. 3 shows the step of clamping the sheet 1 by lowering the upper mold 8 toward the lower mold 2 or by lifting the lower mold 2 toward the upper mold 8. In this step, the preheated sheet 1 is formed and elongated to a certain extent so as to fit into the inner surface of the lower mold 2 by the pressure of the pressing plug 9.

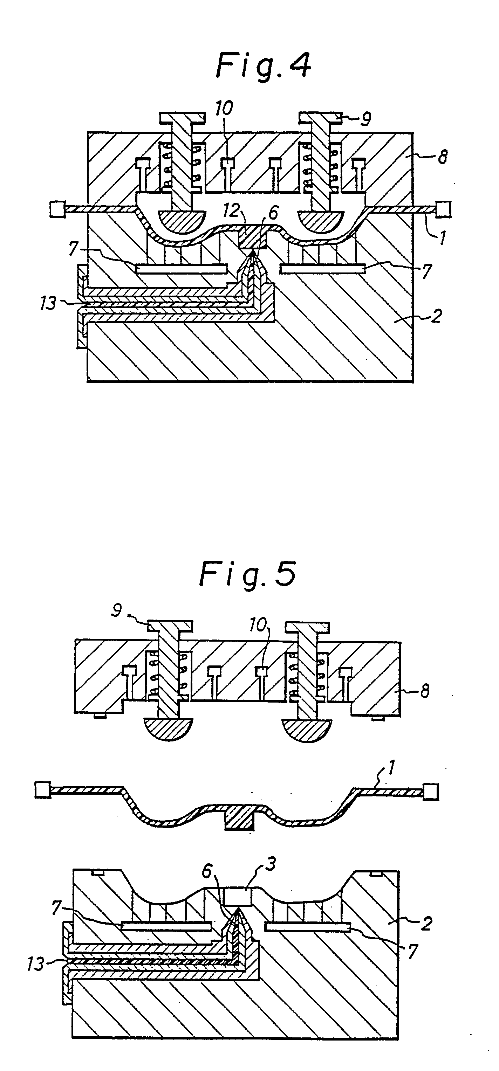

Fig. 4 shows the state in which the heated sheet 1 is formed into a predetermined shape by evacuating from the suction hole 7 and/or air pressurizing from the air pressure hole 10 simultaneously with the clamping of the upper mold 8 and the lower mold 2. At the same time, the undersurface of the sheet 1 is brought into contact with the molten resin in the cavity 3 having the shape matched with the shape of protrusions such as boss and rib. The clamping state is retained until the heated sheet 1 and the protrusions formed on the undersurface of the sheet 1 are cooled and solidified, thereby obtaining a thin-wall molded article (sheet product) having protrusions integral with the sheet 1.

Fig. 5 shows the state in which the molds are opened and the molded article having a predetermined shape and protrusions is taken out. The protrusions such as boss and rib are completelty welded and solidified integrally on the lower side of the molded article (sheet product).

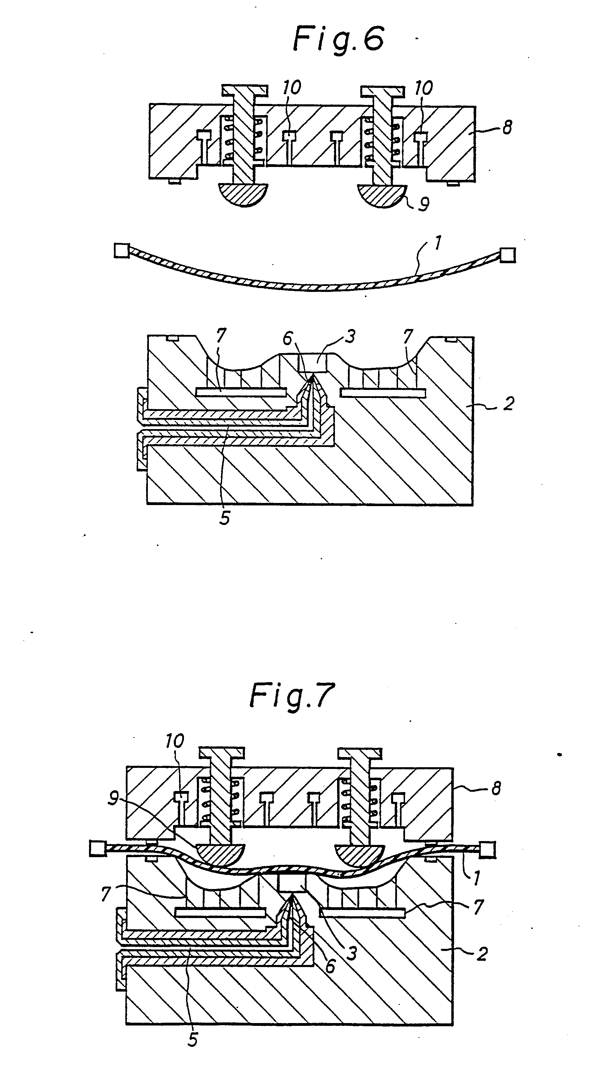

Another example of the method according to the present invention will be explained with reference to Figs. 6 to 9.

Fig. 6 shows the state in which the sheet 1 preheated by the heater 11 or the like is inserted in a semi-molten state between the upper mold 8 and the lower mold 2.

Fig. 7 shows the step of clamping of the molds by lowering the upper mold 8 toward the lower mold 2 or by lifting the lower mold 2 toward the upper mold 8. In this step, the preheated sheet 1 is formed and elongated to a certain extent so as to fit into the inner surface of the lower mold 2 by the pressure of the pressing plug 9.

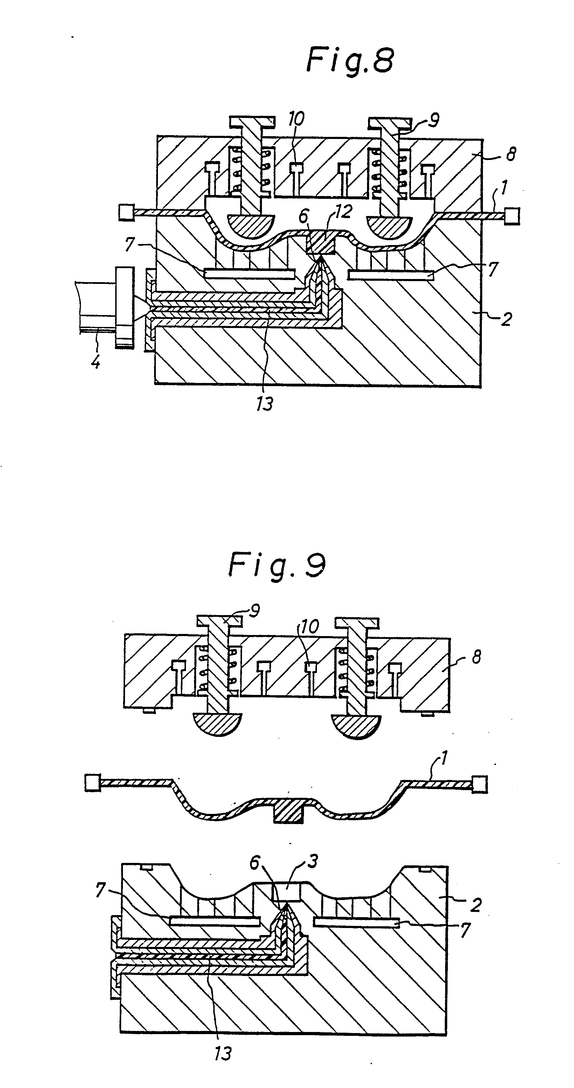

Fig. 8 shows the state in which the heated sheet 1 is formed into a predetermined shape by evacuating from the suction hole 7 and/or air pressurizing from the air pressure hole 10 simultaneously with the clamping of the upper mold 8 and the lower mold 2. At the same time or immediately after the clamping, the molten resin from the molten resin supplyer 4 is supplied from the nozzle 6 to the cavity 3 for forming the protrusions such as boss and rib through the feed passage 5 and is brought into contact with the undersurface of the sheet 1 to be welded together. The clamping state is retained until the heated sheet 1 and the protrusions formed on the undersurface of the sheet 1 are cooled and solidified, thereby obtaining a thin-wall molded article (sheet product) having protrusions integral with the sheet 1.

Fig. 9 shows the state in which the molds are opened and the molded article having a predetermined shape and protrusions is taken out. The protrusions such as boss and rib are completely welded and solidified integrally on the lower side of the molded article (sheet product).

As the resin used for forming the protrusions such as boss and rib, a thermoplastic resin having a good welding property with the material of the thermoplastic synthetic resin sheet is used. For example, the resin for forming the protrusions is appropriately selected from polyolefin resin such as polyethylene and polypropylene, vinyl chloride resin such as polyvinyl chloride and a vinyl chloride-vinyl acetate copolymer, and styrene resin such as polystyrene, an acrylonytril-styrene copolymer and an acrylonytril-butadiene-styrene terpolymer.

In the abve examples, a vaccum-pressure forming method in which the sheet was pressed against the inner surface of the mold by evacuating the lower mold and pressing by air-pressure from the upper mold is adopted, but it is also possible to evacuate the upper mold and to press by air-pressure from the lower mold depending upon the material of the sheet, etc. Alternatively, a vacuum method for forming only by vacuum without using the upper mold or the pressing plugs may be adopted. Stamping forming (press forming) in which a heated sheet is formed by clamping between the upper mold and lower mold may be also adopted.

Although, the molten resin for forming the protrusions is supplied before or after forming the sheet in the above exmples, the molten resin may be supplied to the cavity during the thermoforming of the thermoplastic synthetic resin sheet to be welded together.

Furthermore, it is possible to provide a upper mold with pressing means such as the pressing plug 9 so as to apply a pressing force from the opposite side of the protrusions at the time of forming the protrusions for the purpose of accelerating the forming of the protrusions.

According to the present invention, it is possible to produce a thin-wall molded article having portrusions such as boss and rib with good efficiency. Since, the method according to the present invention relates to the thermoforming of a sheet material, it is possible to produce a thin-wall molded article at a high speed and to use a polymer resin of a high strength as the material for the sheet.

As the mold, a cheap thermoforming mold may be fundamentally usable.

As the resin for forming protrusions such as boss and rib, a resin having an appropriate viscosity may be selected in accordance with the shape of protrusions, and a low pressure for supplying the molten resin to the cavity may be adopted.

The method according to the present invention also facilitates forming a sheet material laminated with a soft material such as cloth.

The molded article obtained by the method according to the present invention is preferably used as an interior material for automobiles such as the interior material for a trunk and other parts.

## Claims

1. A method for producing a thin-wall molded article having protrusions, which comprises

using a mold which comprises a cavity on the inner surface of said mold, which is matched with the shape of said protrusions, and a feed passage for a molten thermoplastic resin which passes through said mold and reaches said cavity, and

supplying said molten thermoplastic resin which is fusible with a thermoplastic synthetic resin sheet to said cavity before or during the thermoforming of said thermoplastic synthetic resin sheet, or while said thermoplastic synthetic resin sheet is still in a heated state after the thermoforming, thereby contacting said molten thermoplastic resin with said thermoplastic synthetic resin sheet and forming said protrusions integrally on said thermoplastic synthetic resin sheet.

2. A mold for producing a thin-wall molded article having protrusions, which comprises a cavity on the inner surface of said mold, which is matched with the shape of said protrusions, and a feed passage for a molten thermoplastic resin as a material for said protrusions, said feed passage passing through said mold and reaching said cavity.

3. The mold according to claim 2, wherein said mold further comprises suction holes.

4. The mold according to claim 2 or 3, wherein said mold further comprises an upper mold provided with air pressure holes.

5. The mold according to claim 2 or 3, wherein said mold further comprises an upper mold provided with pressing plugs.

6. The mold according to claim 2 or 3, wherein said mold further comprises an upper mold provided with presssure plugs and air-pressure holes.

# Fig.1

# Fig.2

# Fig.3

## Fig.4

## Fig.5

# Fig.6

# Fig.7

Fig.8

Fig.9